# EUROPEAN PATENT SPECIFICATION

(11) **EP 2 895 383 B1**
(45) Date of publication and mention of the grant of the patent: **15.08.2018**
(21) Application number: 13771647.8
(22) Date of filing: 13.09.2013
(51) Int. Cl.: B62D 24/00, B62D 27/06, E02F 9/04, B63B 7/04, B63B 35/34, B63B 35/38, B63B 35/44, E02F 9/06

(54) **A FLOATING DEVICE FOR A SPIDER EXCAVATOR AND A SPIDER EXCAVATOR HAVING THE SAME**
SCHWIMMENDE VORRICHTUNG FÜR EINEN SCHREITBAGGER UND SCHREITBAGGER DAMIT
DISPOSITIF FLOTTANT POUR EXCAVATRICE ARAIGNÉE ET EXCAVATRICE ARAIGNÉE COMPRENANT CELUI-CI

(30) Priority: 14.09.2012 US 201261700955 P
(43) Date of publication of application: 22.07.2015
(73) Proprietor: Thainex-Asia Co. Ltd., Chonburi 20150 (TH)
(72) Inventor: OBRY, Jean, marie, Chonburi 20150 (TH)
(74) Representative: Curell Suñol S.L.P.
(86) International application number: PCT/TH2013/000046
(87) International publication number: WO 2014/042602

(56) References cited:
- FR-A1- 2 672 564
- US-A- 4 817 554

## Description

### TECHNICAL FIELD OF THE INVENTION

This invention relates to a mechanical engineering, in particularly in the field of an excavator.

### BACKGROUND OF THE INVENTION

An excavator including a spider excavator is known and there have been continue development on the mechanism and structure in order to enhance its performance as well as to increase the ranges of the terrain on which the machine may be operated on. One of the desirable features of an excavator is the ability to work in flood areas as well as natural water features such as canals, rivers, catchments, marshlands, etc. To accommodate such needs, a sort of floating device to support the excavator while working is developed. The known floating device is for example, a barge, pontoon. However, loading, transporting, and unloading of the barge or pontoon including maneuvering the exactor onto such floating devices are with great difficulties. Accordingly a new and improved floating device is desirable.

Document US 4 817 554 A discloses an adapter for rendering an earth mover amphibious, comprising a buggy assembly having a pair of buoyant pontoons and tracks that are driven around the pontoons by hydraulic motors situated coaxially with drive sprockets for the track. The track is driven by the motor without an intermediate chain drive, thus avoiding certain environmental and personal dangers.

### SUMMARY OF THE INVENTION

The present invention provides a new and improved floating platform for excavators according to claim 1.

According to one aspect of the invention, the invention provides a floating platform for a spider excavator. The floating platform comprises a central hub capable of coupling to the underside of the spider excavator. The central hub is prepared with two floating members wherein each floating member is removably connected to the lateral side of the central hub. The free end of each of the floating member is equipped with a removable floating tank.

According to another aspect of the invention, the invention provides a spider excavator comprising a floating platform. The floating platform is removably connected to the underside of the spider excavator.

Further advantageous features and improvements of the invention are disclosed in the dependent claims.

### BRIEF DESCRIPTION OF DRAWINGS

Advantages and characteristics of the invention will be appreciated from the following description, in which, as a non-limiting example, some preferable embodiments of the principle of the invention are described, with reference to the accompanying drawings, in which:
FIG. 1 shows a spider excavator comprising an embodiment of a floating platform according to the present invention;
FIG. 2 shows a bottom view of the spider excavator having a floating platform assembled thereon with indication of arrangement of an embodiment of mating elements prepared on a central hub of the floating device;
FIG. 3 shows an embodiment of the mating element for coupling of the excavator to the floating platform;
FIG. 4 shows operation flow of assembling a floating tank to the floating member of the floating platform;
FIG. 5 shows exploded view of coupling mechanism of the floating tank to the floating member;
FIG. 6 shows exploded of coupling elements prepared on the floating member;
FIG. 7 shows an embodiment of the floating tank and transporting arrangement of the floating platform; and
FIG. 8 shows a further embodiment of the floating tank and transporting arrangement of the floating platform.

### DETAILED DESCRIPTION OF THE INVENTION

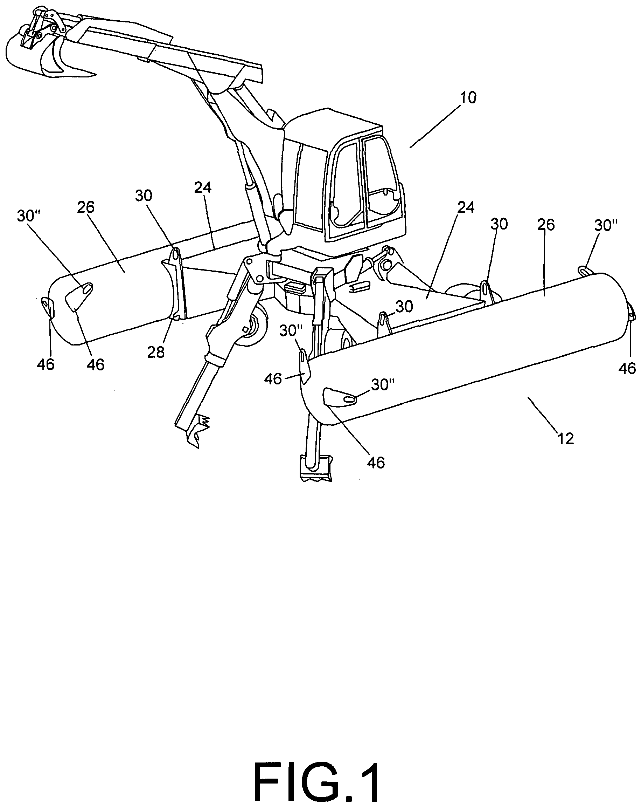

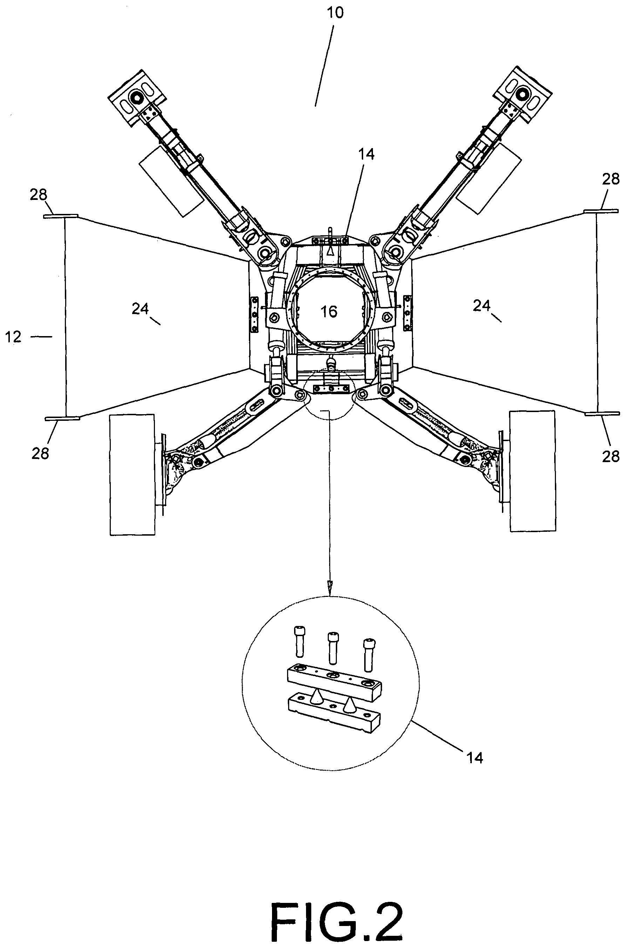

The present invention disclosed a floating platform for an excavator, more specifically, a floating platform for a spider excavator. As shown in FIG. 1 and FIG. 2, the spider excavator 10 is of known structures and features characterized in that the underside of the spider excavator 10 is prepared with a mating element 14 for coupling itself to a floating platform 12 of which prepared with a corresponding mating element configured to couple with the mating element 14 prepared on the underside of the spider excavator 10.

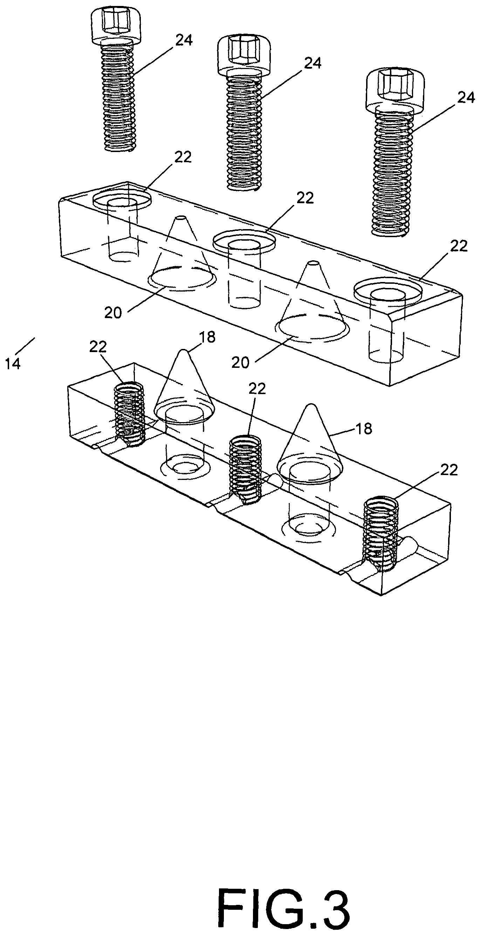

As shown in FIG. 2, the underside of the excavator 10 is prepared with a plurality of mating elements 14 at various positions around the outer edge of the underside of the excavator 10 and a plurality of mating elements 14 with corresponding configurations are prepared at corresponding positions on a central hub 16 of the floating platform 12. The mating element 14 may be of any corresponding male and female mating elements such that coupling between them is permitted. Preferably, the mating element 14 is of an embodiment and configuration as shown in FIG. 3. According to the embodiment as shown in FIG. 3, the mating element 14 is configured as a plurality of spaced-apart male mating elements 18 defined as a conical shape protruding from the central hub 16 or the underside of the excavator 10; and a corresponding conical female mating element 20 prepared within the central hub 16 or the underside of the excavator 10 such that the male and female mating element 18, 20 are able to couple to one another. The mating element 14 is also prepared with a plurality of spaced-apart threaded through holes 22 positioned at interval of the male and female mating elements 18, 20. Each of the through holes 22 receives a threaded bolt 24 to secure the coupling between the excavator 10 and the floating platform 12.

Also as illustrates in FIG. 2, the floating platform 12 is prepared with two removable floating members 24 each of which is assembled to a lateral side of the central hub 16. The floating member 24 is an air-tight hollow member detachably connected to the central hub 16 using appropriate coupling means, including the mating element as previously described for the coupling between the underside of the excavator 10 and the central hub 16. The free end of each of the floating member 24 is designed to be able to receive coupling of an air-tight floating tank 26.

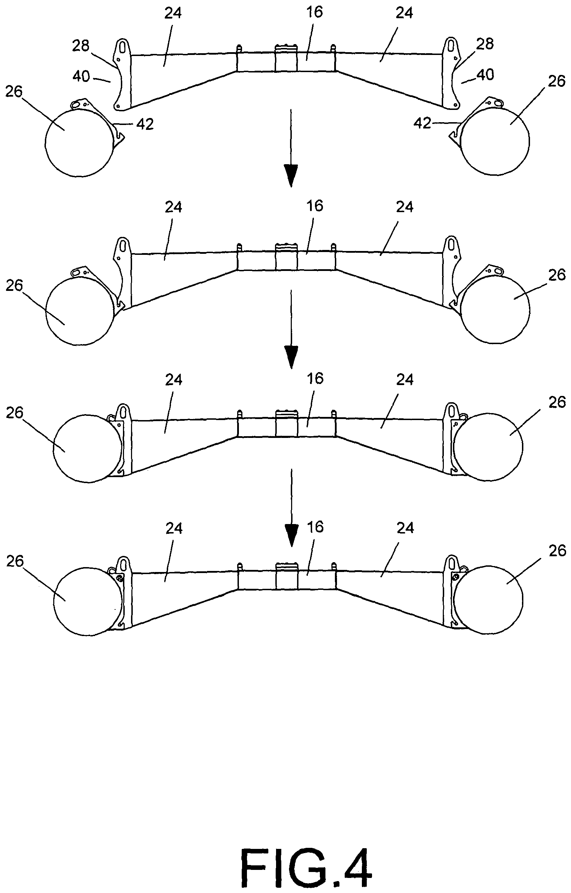

FIGs. 4-6 show an embodiment of a coupling mechanism between the free end of the floating member 24 and the floating tank 26. The floating member 24 is widened toward the free end, wherein the free end is equipped with a pair of spaced-apart coupling wings 28. The coupling wing 28 is machined to have a shape and configuration of the floating tank 26. In this embodiment, the floating tank 26 has a cylindrical shape. Accordingly, the coupling wing 28 has an arch- shape face corresponding to the arch of the circumference of the floating tank 26. The upper section of the coupling wing 28 is prepared with an opening 30 which received a chain or a wire of a sling or a winch so as to facilitate maneuvering of the floating member 24 into place for coupling with the central hub 16. Adjacent to the opening 30 is a pin hole 32 which receives a pin 34 for securing coupling between the floating member 24 and the floating tank 26. The lower section of the coupling wing 28 is prepared with a protrusion 36, one the side of the coupling wing 28 which will engage with a slot 38 prepared on a coupling face 40 of the floating tank 26.

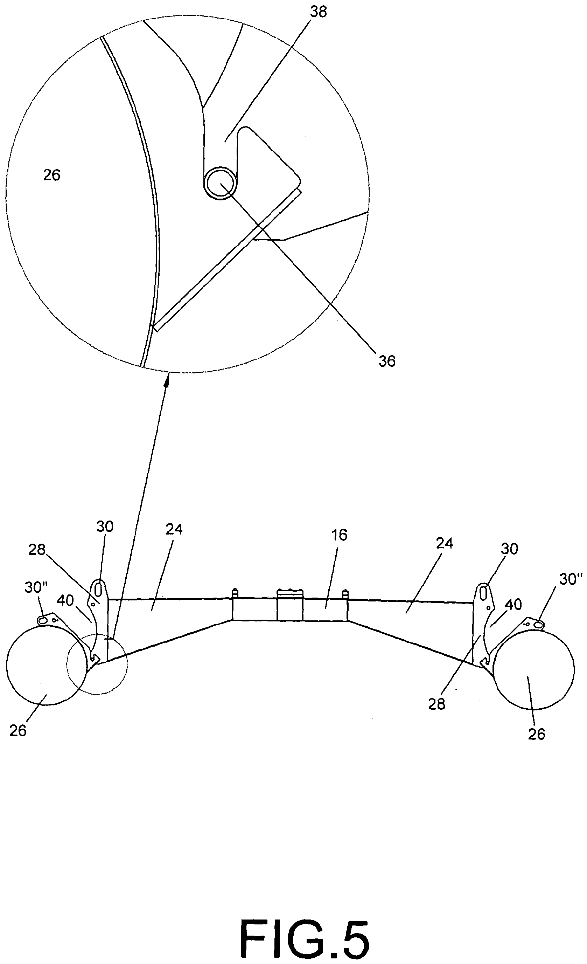

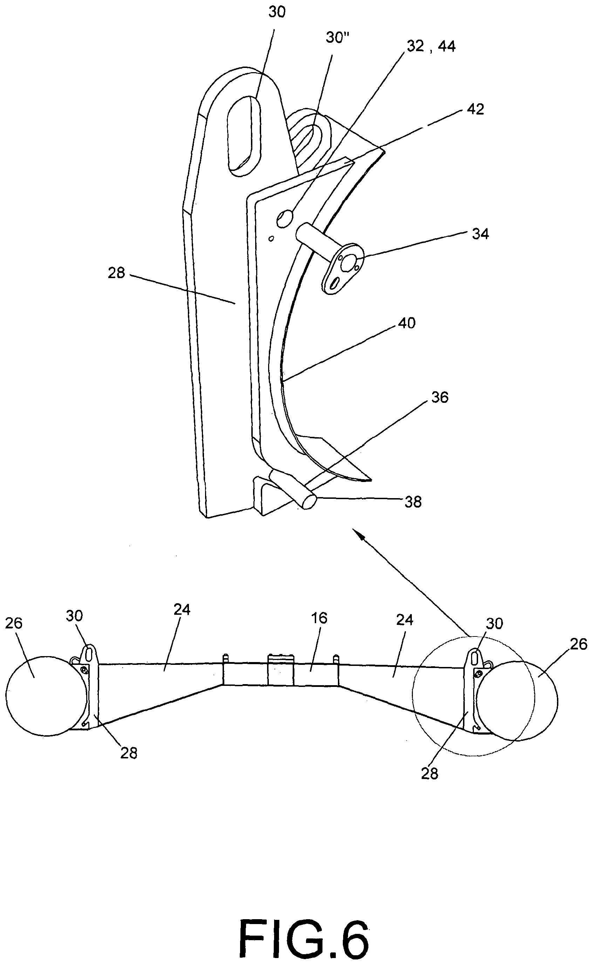

In the embodiment as shown in FIGs. 5 and 6, the floating tank 26 is prepared with a pair of the coupling face 40. Each of the coupling face 40 is prepared on the circumference or the external surface of the floating thank 26 which will face the floating member 24 and is spaced-apart along the length of the floating tank 26 at a corresponding position to the position of the coupling wings 28 of the floating member 24. In this embodiment, the coupling face 40 of the floating tank 26 has an arch shape face and a coupling plate 42 extending from the said coupling face 40 in the direction of the coupling wing 28 of the floating member 24. The upper portion of the coupling plate 42 is prepared with a pin hole 44 at a location corresponding to the pin hole 32 on the coupling wing 28. The lower portion of the coupling plate 42 is prepared with a slot 38 cut inward into the coupling plate 42 at a position corresponding to the position of the protrusion 36 prepared on the coupling wing 28 of the floating member 24. Once the floating member 24 is maneuvered into a position ready for securing the coupling between the floating member 24 and the floating tank 26, the coupling wing 28 is aligned to the coupling plates 42 of the coupling face 40 of the floating tank 26 and the protrusion 36 rest within the slot 38 on the coupling plate 42 as seen in FIG. 5; and wherein the pin hole 32 on the coupling wing 28 of the floating member 24 align with the pin hole 44 on the coupling plate 42 of the floating tank 26, a pin 34 is inserted into said pin holes 32, 44 to secure the coupling between the floating member 24 and the floating tank 26. The upper section of the coupling plate 42 is prepared with an opening 30" which received a chain or a wire of a sling or a winch so as to facilitate maneuvering of the floating tank 26 into place with the floating member 24. The flow of maneuvering the floating tank 26 to couple with the floating member 24 is as shown in FIG. 4. Other designs, arrangement and configuration of the coupling mechanism between the floating member 24 and the floating tank 26 are also possible.

The size and dimension and configuration of the floating member 24 as well as the floating tank 26 is designed to be able to support the weight of the excavator 10 plus the weight of the dirt or force exerted by the excavator 10 as the excavator is in operation such that the floating platform 12 is able to carry the excavator without sinking and able to maintain balance of the excavator while the working in deep water wherein the spider leg of the excavator 10 cannot reach the bed of the rivers, canals, or catchments including where the spider leg cannot gain a grip footing to such beds. Such knowledge is pertinent to a person skilled in art and thus a detailed description is not mentioned herein.

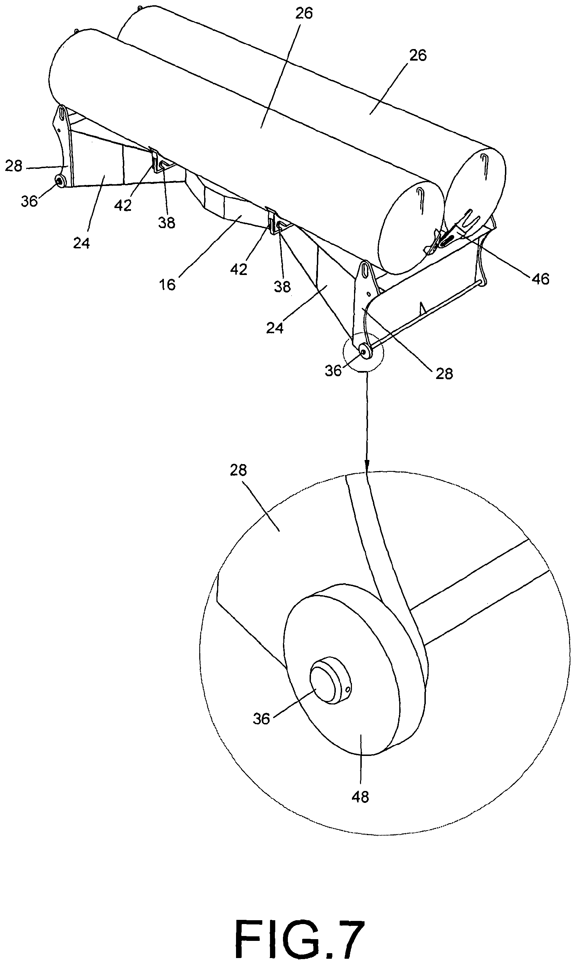

In one embodiment, for the ease of transportation, the floating platform 12 is dimensioned to fit within a conventional size transport container. FIG. 7 show an arrangement of the floating platform 12 for transportation to a working site. In this arrangement, the floating member 24 is pre-assembled to the central hub 16 and the floating tank 26 is placed on top. This arrangement facilitates easy transport of the floating platform 12 to a working site. Once reached the site, the floating tank 26 can be easily and quickly assembled to the floating member 24 forming a complete floating platform 12 ready for coupling with the excavator.

In one embodiment, as shown in FIG. 7, the floating thank 26 has a rectangular shape. Accordingly, in this embodiment, the coupling wing 28 on the floating member 24 is also configured to complement with the rectangular shape of the floating tank 26. That is, in this embodiment, the floating member 24 and the floating tank 26 possess all the elements as previously described for the first embodiment in which the floating tank 26 has cylindrical shape. Accordingly, it is not necessary to repeat them. However, since in this embodiment, the floating tank has a rectangular shape, the coupling wing 28 on the floating member 24 is also prepared with a straight face to complement the straight profile of the coupling plate 42 disposed on the external wall of the rectangular floating tank 26.

In another embodiment as shown in FIG. 7, the floating member 24, more specifically, at the lower portion of each the coupling wing 28, is further equipped with wheels 48 to facilitate moving, loading and unloading of the detached platform to or from the container. The wheels 48 are removably assembled to the protrusion 36 of the coupling wing 28 and are removed prior to coupling of the protrusion 36 with the slot 38 as the coupling wing is coupled with the floating tank 26.

The floating tank 26 may also be prepared with a plurality of tabs 46 (as shown in FIGs. 1,7 and 8), each with a passage at each end of the floating tanks so as to receive chain or wire of a sling or winch so as to facilitate maneuvering of the floating tanks 26.

In a second aspect of the invention, the invention provides a spider excavator 10 comprising a floating platform 12 of which comprising the features and elements as described in the first aspect of the invention. In one embodiment of the invention, the spider excavator 10 is equipped with a sensing device or a navigation system (not shown) which enable the spider excavator 10 to maneuver itself to position above a pre-assembled floating platform 12 (at a working site) such that the mating elements 14 on the underside of the spider excavator 10 and on the central hub 16 of the floating platform 12 align with one another and lower itself to allow the mating element 14 to on the underside of the spider excavator 10 and on the central hub 16 of the floating platform 12 to engage with each other and allow the crew or worker to secure the coupling thereof with the bolts 24.

The floating platform 12, according to the present invention also provides an effective safety measure for the excavator 10 against sinking incident should the excavator venture into deeper water.

It is clear from the foregoing paragraphs that the present invention provides an effective alternative floating means for a spider excavator and wherein the assembling, disassembling, or transportation of the floating device can be done quickly with ease. A person skilled in the art would appreciate that certain features and element may be modified or adapted to achieve the same function and effects and hence such modification is regarded to be within the scope of the present invention as defined by the appended claims.

## Claims

1. A floating platform (12) for a spider excavator (10) comprising a central hub (16) configured to couple with the underside of the spider excavator (10), the said central hub (16) comprising two floating members (24), each floating member (24) is removably connected to a lateral side of the central hub (16), and a removable floating tank (26) coupled to each free end of the said floating members (24),
**characterized in that**
the floating member (24) is widen toward its free end, said free end is equipped with a pair of spaced-apart coupling wings (28) machined to possess a shape and configuration corresponding to those of a pair of spaced-apart coupling faces (40) prepared on the floating tank (26) at a position corresponding to the position of the coupling wing (28) on the floating member (24) permitting securing of the floating tank (26) to the floating member (24) at the said coupling wing and the said coupling face (40), and **in that**
the said floating member (24) includes wheels arranged at the lower portion of the coupling wing (28) to facilitate moving and loading and unloading.

2. The floating platform (12) according to claim 1, wherein the central hub (16) comprising a plurality of mating elements (14) configured to couple with corresponding mating elements (14) prepared on the underside of the spider excavator (10).

3. The floating platform (12) according to claim 2, wherein the mating elements (14) prepared on the underside of the spider excavator (10) and the central hub (16) are defined as a plurality of spaced-apart male and female mating elements (18, 20) having conical shape protruding from the central hub (16) and/or the underside of the spider excavator (10) of which capable of mating with corresponding space-apart inward conical shapes prepared on the central hub (16) and/or the underside of the spider excavator (10); and a plurality of spaced-apart threaded through holes (22) positioned to interval the said conically shaped mating element, each of the through hole (22) receives a threaded bolt (24) securing the coupling between the excavator (10) and the floating platform (12).

4. The floating platform (12) according to claims 2 or 3, wherein the floating member (24) is an air-tight hollow member and wherein an end of the floating member (24) is connected to the central hub (16) and its free end is configured to receive coupling of the floating tank (26).

5. The floating platform (12) according to claim 1, wherein the floating tank (26) is an air-tight cylindrical or rectangular tank of which its coupling face (40) includes a coupling plate (42) extending from the said coupling face (40) in the direction of the coupling wing (28) of the floating member (24); the upper portion of the coupling plate (42) includes a pin hole (44) prepared at a location corresponding to a pin hole (32) on the coupling wing (28); the lower portion of the coupling plate (42) includes a slot (38), prepared at a location corresponding to the location of a protrusion (36) prepared on the lower portion of the coupling wing (28).

6. The floating platform (12) according to claim 5, wherein the coupling face (40) includes an opening (30") configured to receive a chain or a wire or a sling or a winch to facilitate maneuvering of the floating tank (26) toward the coupling wing (28) so as to insert the protrusion (36) on the coupling wing (28) into the slot (38) of the coupling face (40) and align the pin hole (32) with the pin hole (44) of which said pin holes (32, 44) receives a pin (34) securing the coupling between the floating member (24) and the floating tank (26).

7. The floating platform (12) of any one of claims 1-6 for use with a spider excavator (10).

## Patentansprüche

1. Schwimmende Plattform (12) für einen Schreitbagger (10), die einen zentralen Unterbau (16), der dazu eingerichtet ist, mit der Unterseite des Schreitbaggers (10) gekoppelt zu werden, wobei der zentrale Unterbau (16) zwei Schwimmelemente (24) umfasst, wobei jedes Schwimmelement (24) mit einer lateralen Seite des zentralen Unterbaus (16) entfernbar verbunden ist, und einen mit jedem freien Ende der Schwimmelemente (24) gekoppelten, entfernbaren Schwimmbehälter (26) umfasst,
**dadurch gekennzeichnet, dass**
das Schwimmelement (24) sich zu seinem freien Ende hin aufweitet, wobei das freie Ende mit einem Paar von beabstandeten Kopplungsauskragungen (28) ausgestattet ist, die so bearbeitet sind, dass sie eine Form und Aufbau haben, die jenen eines Paars von beabstandeten Kopplungsflächen (40), die auf dem Schwimmbehälter (26) an einer der Position der Kopplungsauskragung (28) entsprechenden Position auf dem Schwimmelement (24) vorgesehen sind, entsprechen, sodass eine Sicherung des Schwimmbehälters (26) an dem Schwimmelement (24) an der Kopplungsauskragung und der Kopplungsfläche (40) ermöglicht wird, und dass
das Schwimmelement (24) Räder umfasst, die an dem unteren Bereich der Kopplungsauskragung (28) angeordnet sind, um ein Bewegen und Beladen und Entladen zu ermöglichen.

2. Schwimmende Plattform (12) gemäß Anspruch 1, wobei der zentrale Unterbau (16) eine Vielzahl von Paarungselementen (14) umfasst, die dazu eingerichtet ist, mit entsprechenden Paarungselementen (14), die auf der Unterseite des Schreitbaggers (10) vorgesehen sind, gekoppelt zu werden.

3. Schwimmende Plattform (12) gemäß Anspruch 2, wobei die Paarungselemente (14), die auf der Unterseite des Schreitbaggers (10) und an dem zentralen Unterbau (16) vorgesehen sind, definiert sind als eine Vielzahl von beabstandeten männlichen und weiblichen Paarungselementen (18, 20), die eine von dem zentralen Unterbau (16) und/oder der Unterseite des Schreitbaggers (10) hervorstehende, konische Form aufweisen, die in der Lage sind, mit entsprechenden beabstandeten nach innen konischen Formen, die an dem zentralen Unterbau (16) und/oder der Unterseite des Schreitbaggers (10) vorgesehen sind, zusammenzupassen, und als eine Vielzahl von beabstandeten mit Gewinde versehenen Durchgangslöchern (22), die mit den konisch geformten Paarungselementen ein Intervall bildend positioniert sind, wobei jedes der Durchgangslöcher (22) einen Gewindebolzen (24) aufnimmt, um die Kopplung zwischen dem Bagger (10) und der schwimmenden Plattform (12) zu sichern.

4. Schwimmende Plattform (12) gemäß Anspruch 2 oder 3, wobei das Schwimmelement (24) ein luftdichtes, hohles Bauteil ist, und wobei ein Ende des Schwimmelements (24) mit dem zentralen Unterbau (16) verbunden ist und sein freies Ende dazu eingerichtet ist, die Kopplung mit dem Schwimmbehälter (26) zu bewirken.

5. Schwimmende Plattform (12) gemäß Anspruch 1, wobei der Schwimmbehälter (26) ein luftdichter zylindrischer oder rechteckiger Behälter ist, dessen Kopplungsfläche (40) eine Kopplungsplatte (42) umfasst, die sich von der Kopplungsfläche (40) in der Richtung der Kopplungsauskragung (28) des Schwimmelements (24) erstreckt; wobei der obere Bereich der Kopplungsplatte (42) ein Stiftloch (44), das an einem Ort, der einem Stiftloch (32) auf der Kopplungsauskragung (28) entspricht, vorgesehen ist, umfasst; wobei der untere Bereich der Kopplungsplatte (42) einen Schlitz (38), der an einem Ort vorgesehen ist, der dem Ort eines Vorsprungs (36), der auf dem unteren Bereich der Kopplungsauskragung (28) vorgesehen ist, entspricht, umfasst.

6. Schwimmende Plattform (12) gemäß Anspruch 5, wobei die Kopplungsfläche (40) eine Öffnung (30") umfasst, die dazu eingerichtet ist, eine Kette oder ein Kabel oder eine Schlaufe oder eine Winde aufzunehmen, um ein Manövrieren des Schwimmbehälters (26) zu der Kopplungsauskragung (28) hin ermöglicht, sodass der Vorsprung (36) auf der Kopplungsauskragung (28) in den Schlitz (38) der Kopplungsfläche (40) eingeführt wird und das Stiftloch (32) an dem Stiftloch (44) ausgerichtet wird, wobei die Stiftlöcher (32, 44) einen Stift (34) aufnehmen, der die Kopplung zwischen dem Schwimmelement (24) und dem Schwimmbehälter (26) sichert.

7. Schwimmende Plattform (12) gemäß einem der Ansprüche 1 bis 6 zur Verwendung mit einem Schreitbagger (10).

## Revendications

1. Plate-forme flottante (12) pour une pelle araignée (10) comprenant un moyeu central (16) configuré pour se coupler au côté inférieur de la pelle araignée (10), ledit moyeu central (16) comprenant deux éléments flottants (24), chaque élément flottant (24) est relié de manière amovible à un côté latéral du moyeu central (16), et un réservoir flottant amovible (26) couplé à chaque extrémité libre desdits éléments flottants (24),
**caractérisée en ce que**
l'élément flottant (24) est élargi vers son extrémité libre, ladite extrémité libre est équipée d'une paire d'ailes de couplage espacées (28) usinées pour posséder une forme et une configuration correspondant à celles d'une paire de faces de couplage espacées (40) préparées sur le réservoir flottant (26) à une position correspondant à la position de l'aile de couplage (28) sur l'élément flottant (24) permettant de fixer le réservoir flottant (26) à l'élément flottant (24) au niveau de ladite aile de couplage et de ladite face de couplage (40), et **en ce que**
ledit élément flottant (24) comprend des roues agencées au niveau de la partie inférieure de l'aile de couplage (28) pour faciliter un déplacement et un chargement et déchargement.

2. Plate-forme flottante (12) selon la revendication 1, dans laquelle le moyeu central (16) comprend une pluralité d'éléments d'accouplement (14) configurés pour se coupler à des éléments d'accouplement correspondants (14) préparés sur le côté inférieur de la pelle araignée (10).

3. Plate-forme flottante (12) selon la revendication 2, dans laquelle les éléments d'accouplement (14) préparés sur le côté inférieur de la pelle araignée (10) et le moyeu central (16) sont définis comme une pluralité d'éléments d'accouplement mâles et femelles espacés (18, 20) ayant une forme conique faisant saillie depuis le moyeu central (16) et/ou le côté inférieur de la pelle araignée (10) pouvant s'accoupler avec des formes coniques intérieures espacées correspondantes préparées sur le moyeu central (16) et/ou le côté inférieur de la pelle araignée (10) ; et une pluralité de trous traversants filetés espacés (22) positionnés à un intervalle desdits éléments d'accouplement de formes coniques, chacun des trous traversants (22) reçoit un boulon fileté (24) assurant le couplage entre la pelle (10) et la plate-forme flottante (12).

4. Plate-forme flottante (12) selon les revendications 2 ou 3, dans laquelle l'élément flottant (24) est un élément creux étanche à l'air et dans lequel une extrémité de l'élément flottant (24) est connectée au moyeu central (16), et son extrémité libre est configurée pour recevoir un couplage du réservoir flottant (26).

5. Plate-forme flottante (12) selon la revendication 1, dans laquelle le réservoir flottant (26) est un réservoir cylindrique ou rectangulaire étanche à l'air dont la face de couplage (40) comprend une plaque de couplage (42) s'étendant à partir de ladite face de couplage (40) dans la direction de l'aile de couplage (28) de l'élément flottant (24) ; la partie supérieure de la plaque de couplage (42) comprend un trou d'épingle (44) préparé à un emplacement correspondant à un trou d'épingle (32) sur l'aile de couplage (28) ; la partie inférieure de la plaque de couplage (42) comprend une fente (38), préparée à un emplacement correspondant à l'emplacement d'une saillie (36) préparée sur la partie inférieure de l'aile de couplage (28).

6. Plate-forme flottante (12) selon la revendication 5, dans laquelle la face de couplage (40) comprend une ouverture (30") configurée pour recevoir une chaîne ou un fil ou une courroie ou un treuil pour faciliter la manoeuvre du réservoir flottant (26) vers l'aile de couplage (28) de manière à insérer la saillie (36) sur l'aile de couplage (28) dans la fente (38) de la face de couplage (40) et aligner le trou d'épingle (32) avec le trou d'épingle (44), lesdits trous d'épingle (32, 44) recevant une broche (34) assurant le couplage entre l'élément flottant (24) et le réservoir flottant (26).

7. Plate-forme flottante (12) selon l'une quelconque des revendications 1 à 6 à utiliser avec une pelle araignée (10).
